# EUROPÄISCHE PATENTSCHRIFT

(11) **EP 1 881 210 B1**
(45) Veröffentlichungstag und Bekanntmachung des Hinweises auf die Patenterteilung: **03.02.2010**
(21) Anmeldenummer: 07112303.8
(22) Anmeldetag: 12.07.2007
(51) Int. Cl.: F16B 25/00, F16B 33/06

(54) **Befestigungselement**
Fastening element
Elément de fixation

(30) Priorität: 21.07.2006 DE 102006000363
(43) Veröffentlichungstag der Anmeldung: 23.01.2008
(73) Patentinhaber: HILTI Aktiengesellschaft, 9494 Schaan (LI)
(72) Erfinder: Rosenkranz, Falk, 9658, Wildhaus (CH)
(74) Vertreter: Wildi, Roland

(56) Entgegenhaltungen:
- WO-A-2004/005383
- DE-A1- 10 243 537
- GB-A- 1 218 643
- US-A- 3 746 068
- US-A- 3 893 496

## Beschreibung

Die Erfindung betrifft ein Befestigungselement für mineralische Untergründe mit einem Schaft, der ein Drehangriffsmittel aufweist und der zumindest bereichsweise mit einem gewindefurchenden Gewinde sowie zumindest bereichsweise mit einer Beschichtung versehen ist.

Aus der DE 102 43 537 A1 ist ein Befestigungselement für mineralische Untergründe bekannt, das einen Schaft aufweist. Am Schaft ist an einem Ende als Drehangriffsmittel für ein Setzwerkzeug beispielsweise ein Sechskantkopf und ein gewindefurchendes Gewinde vorgesehen, das sich ausgehend von dem, dem Drehangriffsmittel gegenüberliegenden Ende des Schafts bereichsweise entlang des Schafts erstreckt. Der Schaft ist bereichsweise mit einer Beschichtung aus einem elastomeren Material versehen. Die Stärke der Beschichtung ist derart gewählt, dass diese bei dem Eindrehen teilweise komprimiert wird und den Zwischenraum zwischen dem Kern des Befestigungselementes und der Bohrlochwandung abdichtet. Dieses Befestigungselement ist weitgehend ohne den Verbleib von Teilen der geschaffenen Befestigung im Untergrund wiederentfernbar.

Nachteilig an der bekannten Lösung ist, dass zum Setzen eines mit einer elastomeren Beschichtung versehenen Befestigungselementes hohe Eindrehmomente erforderlich sind, welche die Leistungsgrenze einer Vielzahl von konventionellen Schraubgeräten oder sogar die Torsionsfestigkeit des Befestigungselementes überschreiten. Da das zuvor erstellte Bohrloch nur in der Theorie einen runden Querschnitt aufweist, ist die Abdichtung des Bohrlochs nicht in jeder Anwendung gewährleistet. Die Verbindung zwischen der elastomeren Beschichtung und dem Kern des Befestigungselementes kann durch Verlust der Adhäsion zur Schraubenfläche abschälen. Dadurch wird nicht in jeder Anwendung eine Traglasterhöhung infolge der Beschichtung gewährleistet. Des Weiteren führt die Deformation der elastomeren Beschichtung im Spalt zu Spreizkräften, die insbesondere im Bereich des Bohrlochmundes sowie bei geringen Rand- und Achsabständen der Befestigungselemente zu Abplatzungen an der Oberfläche des Untergrundes führen können.

US 3,746,068 zeigt als Befestigungselement eine selbstsichernde Schraube, die mit einer aushärtbaren Beschichtung versehen ist, die einen Thermoplast (z. B. Polyamid) als Binder für eine Verkapselung umfasst. Weiter schlägt diese Schrift als Binder lösliche Copolymere aus Ethylen und Propylen vor.

US 3,893,496 zeigt als Befestigungselement eine Schraube, deren Gewinde mit einer nach aussen nicht-haftender Beschichtung versehen ist, die ein teilausgehärtetes oder zumindest viskoses System umfasst, welches mit Thermoplast gefüllt sein kann. Der in der US 3,893,496 angeführte Thermoplast (z. B. Polyamid) dient als Füllstoff.

GB 1 218 643 zeigt als Befestigungselement eine beschichtete Schraube, wobei die Beschichtung ein Thermoplast (z. B. Polyamid, wie Nylon) und Molybden-Disulfid für eine verbesserte Haftung an einer unbehandelten Schraube umfasst.

Aufgabe der Erfindung ist es, ein gewindeformendes Befestigungselement für mineralische Untergründe zu schaffen, das einfach setzbar und sofort nach dem Setzen belastbar ist, eine Traglasterhöhung gegenüber einem herkömmlichen gewindeformenden Befestigungselement aufweist sowie wiederentfernbar ist.

Die Aufgabe ist durch die Merkmale des unabhängigen Anspruchs gelöst. Vorteilhafte Weiterbildungen sind in den Unteransprüchen dargelegt.

Gemäss der Erfindung ist die Beschichtung ein polarer Thermoplast, der eine Schmelztemperatur von 50°C bis 150°C aufweist.

Der polare Thermoplast gewährleistet, dass die Beschichtung stark auf der Aussenfläche des Befestigungselementes haftet und somit nicht beim Eindrehen des Befestigungselementes durch einen Verlust der Adhäsion zum Befestigungselement von diesem abgeschält wird. Überraschenderweise hat sich herausgestellt, dass polare Thermoplaste bzw. Kunststoffe an einem gewindeformenden Befestigungselement eine Vielzahl der gewünschten Eigenschaften abdecken.

Beim Eindrehen des Befestigungselementes erwärmt sich die Beschichtung, wobei lediglich ein begrenzter, radialer äusserer Bereich, nachfolgend Schmelzbereich genannt, bis an die Schmelztemperatur des polaren Thermoplast erwärmt wird, was eine leichte Verklebung der Beschichtung mit der Bohrlochwandung begünstigt und somit bei einer entsprechend auf die Abmessungen des Befestigungselementes und des Bohrlochs abgestimmten Schichtstärke der Beschichtung eine vollständige Abdichtung des Bohrlochs gegenüber flüssigen Medien gewährleistet. Die Verklebung mit der Bohrlochwandung weist eine geringe adhäsive Wirkung auf, so dass ein gesetztes Befestigungselement zu einem späteren Zeitpunkt einfach und ohne eine Zerstörung des das Befestigungselement umgebenden Untergrundbereichs entfernt werden kann. Bohrlochtoleranzen werden direkt beim Setzvorgang ausgeglichen. Des Weiteren weist das erfindungsgemässe Befestigungselement im gesetzten Zustand gegenüber einem unbeschichteten Befestigungselement wesentlich erhöhte Verankerungskennwerte und somit eine hohe Tragfähigkeit auf, wobei das erfindungsgemässe Befestigungselement gleichzeitig eine Robustheit des Setzprozesses aufweist.

Ein wesentlicher Vorteil von gewindeformenden Befestigungselementen ist die Möglichkeit, diese wieder aus dem Untergrund herauszuschrauben, ohne dass Teile der geschaffenen Befestigung im Untergrund verbleiben. Insbesondere gewindefurchende Betonschrauben, die in mineralische Untergründe gesetzt werden, haben sich für temporäre Befestigungen beispielsweise beim Schalungsbau, beim Gerüstbau oder beim Festlegen von Bohr- und Schneidwerkzeugen in der Diamant-Bohr- und Trenntechnik in der Praxis bewährt. Die gewindefurchenden Befestigungselemente sind nicht nur demontierbar, sondern prinzipiell auch für eine erneute Verwendung nutzbar. Aus diesen Gründen stellt die Wiederentfernbarkeit einen wesentlichen Vorteil eines gewindeformenden Befestigungselementes dar.

Zur Sicherstellung der Abdichtfunktion und der Lasterhöhung muss kein Stoffumsatz beziehungsweise chemischer Prozess der Beschichtung stattfinden. Da lediglich ein physikalischer Prozess stattfindet, ist das gesetzte Befestigungselement ohne Abwarten z. B. einer Aushärtzeit sofort belastbar. Der erwärmte Schmelzbereich der Beschichtung kühlt innerhalb weniger Minuten ab, so dass die Zeit vom Absetzen des Setzwerkzeuges und bis zu dem Beginn weiterer Arbeiten ausreicht, um den geschaffenen Befestigungspunkt sofort zu belasten. Überkopfmontagen stellen bei der Montage des Befestigungselementes kein Problem dar. Zudem können, im Gegensatz zu einem mit einer aushärtbaren Masse befüllten Bohrloch, beim Einführen des Befestigungselement keine Anteile von unausgehärteter Masse aus dem Bohrloch herausspritzen und den das Bohrloch umgebenden Bereich verschmutzen.

Da kein chemischer Prozess stattfindet, hat die Umgebungstemperatur nur bedingt einen Einfluss auf den Anwendungsbereich des erfindungsgemässen Befestigungselementes. Ein aushärtungsbedingtes Schwinden findet nicht statt, was eine einwandfreie Abdichtung des Bohrlochs gewährleistet. Da das zusätzliche Reibungsmoment aufgrund der Beschichtung klein ist, erhöht sich das Eindrehmoment beim Setzen des Befestigungselementes nur unwesentlich gegenüber einem unbeschichteten gewindeformenden Befestigungselement. Das Eindrehmoment ist somit weiterhin kleiner als die Torsionsfestigkeit des Befestigungselementes und auch kleiner als das maximale Drehmoment eines herkömmlichen Schraubgerätes, wie z. B. eines Tangentialschlagschraubers.

Gegenüber unbeschichteten Befestigungselementen weist das erfindungsgemässe Befestigungselement hinsichtlich der Brandfalltauglichkeit keine Einschränkungen auf, da die zulässige Tragfähigkeit durch die thermisch induzierte Verringerung der Festigkeit des Schaftmaterials, wie z. B. des Stahlquerschnitts, des Befestigungselementes bestimmt wird.

Das erfindungsgemässe Befestigungselement ist praktisch unbegrenzt lagerfähig und kann auch bei höheren Temperaturen gelagert werden, ohne dass dies zu Einschränkungen der Funktionalität führt.

Als Schmelztemperatur wird in diesem Zusammenhang die Temperatur angesehen bei der in der DSC (Differential Scanning Calorimetry) mit 5 K/min Aufheizrate der exotherme Wärmestrom maximal ist.

Die untere Temperaturgrenze von 50° C gewährleistet, dass die Beschichtung auch bei einer Lagerung bei hohen Temperaturen, wie sie beispielsweise unter Sonneneinstrahlung in einem geschlossenen Fahrzeug auftreten, nicht schmilzt. Dadurch wird ein Verkleben der beschichteten Befestigungselemente während dem Transport und der Lagerung weitgehend verhindert.

Das Niveau der oberen Temperaturgrenze von 150°C wird üblicherweise beim Eindrehen des erfindungsgemässen Befestigungselementes mit einem von einem Motor angetriebenen Schraubgerät, wie einen Tangentialschlagschrauber an der Bohrlochwandung erreicht. Infolge des bei diesem Vorgang erweichenden Schmelzbereiches der Beschichtung lässt sich diese leichter in den Zwischenraum zwischen dem Schaft und der Bohrlochwandung pressen. Des Weiteren wird die Einbindung des im Bohrloch vorhandenen beziehungsweise beim Furchen des Gegengewindes anfallenden Bohrmehls erleichtert, was nach dem Abkühlen der Beschichtung zu einer Verstärkung der Beschichtung im Schmelzbereich führt und somit die Tragfähigkeit der geschaffenen Befestigung zusätzlich erhöht. Des Weiteren wird dabei die leicht lösbare Verklebung der Beschichtung mit der Bohrlochwandung gewährleistet.

Besonders vorteilhaft weist der polare Thermoplast eine Schmelztemperatur von 50° C bis 100° C auf. Mit der Begrenzung der oberen Temperaturgrenze auf 100° C lassen sich erfindungsgemässe Befestigungselemente auch bei niedrigen Umgebungs- und/oder Untergrundtemperaturen bei Gewährleistung der gewünschten Verankerungskennwerte setzen, bei denen die beim Setzvorgang auftretenden Reibungstemperaturen den Wert von 150° C nicht mehr erreichen.

Ist die Schmelztemperatur des polaren Thermoplast als Beschichtungswerkstoff kleiner oder gleich 150° C, so können für den Beschichtungsprozess Beschichtungstemperaturen gewählt werden, die niedrig genug sind, damit die aus einem Härteprozess des Stahl hervorgegangene und für das Gewindefurchen notwendige Härte nicht reduziert wird.

Vorzugsweise ist der polare Thermoplast ein Ethylenvinylacetat (EVA), der die vorteilhaften Eigenschaften sowie eine Beständigkeit gegen eine Vielzahl insbesondere für Anwendungen im Baubereich relevanter Medien aufweist. Zudem ist Ethylenvinylacetat in der Anwendung unbedenklich, da dieser beispielsweise als Verpackungsmaterial in der Nahrungsmittelindustrie eingesetzt wird.

In einer erfindungsgemässen Variante ist der polare Thermoplast ein thermoplastisches Polyurethan (TPU). Thermoplastisches Polyurethan zeichnet sich insbesondere durch die im Vergleich zu einem Ethylenvinylacetat niedrigere Glasübergangstemperatur aus. Somit bleibt eine Beschichtung aus einem thermoplastischen Polyurethan bei tiefen Umgebungs- und Untergrundtemperaturen weich, wodurch das beschichtete Befestigungselement auch unter diesen Voraussetzungen einfach setzbar ist und eine Abdichtung des Bohrloches gewährleistet.

Vorzugsweise weist der polare Thermoplast eine Festigkeit bei Raumtemperatur von 2 N/mm² bis 15 N/mm² auf. Unter Raumtemperatur wird der Temperaturbereich von 20° C bis 24° C verstanden. Dieser Bereich der Festigkeit gewährleistet, dass überschüssiges Material des polaren Thermoplasts beim Eindrehen des Befestigungselementes in das Bohrloch durch kohäsives Schälversagen von der Beschichtung abgeschält wird. Der Schälschnitt verläuft durch die Beschichtung, wobei der für die ausreichende Abdichtung des Bohrlochs und für die Laststeigerung benötigte Anteil der Beschichtung infolge der grossen Polarität des polaren Thermoplasts auf dem Schaft haften bleibt. Besonders vorteilhaft weist der polare Thermoplast eine Festigkeit bei Raumtemperatur von 2 N/mm² bis 10 N/mm² auf.

Der in das Bohrloch eingebrachte Anteil der Beschichtung ist nur geringen Deformationen unterworfen, so dass keine oder lediglich kleine Spannungen senkrecht zur Längsachse des Befestigungselementes auftreten. Daher sind geringere Achs- und Randabstände als z. B. bei einem mit einem elastomeren Material beschichteten Befestigungselement möglich, wobei das Risiko für Materialausbrüche des Untergrundes um das gesetzte Befestigungselement im Bereich des Bohrlochmundes reduziert ist.

Nach dem Setzen des erfindungsgemässen Befestigungselementes und dem Abkühlen des Schmelzbereiches der Beschichtung ist der polare Thermoplast praktisch in allen Raumrichtungen an einer Verformung gehindert, so dass eine geringe Festigkeit des polaren Thermoplasts keinen Nachteil für die geschaffene Befestigung darstellt. Bei einer auf den polaren Thermoplast aufgebrachte Kraft reagiert dieser quasi hydrostatisch und unterstützt den Lastabtrag des Befestigungselementes in den Untergrund, womit hohe Verankerungskennwerte realisiert werden.

Die Erfindung wird nachstehend anhand eines Ausführungsbeispieles näher erläutert. Es zeigen:
- Fig. 1: Eine Seitenansicht eines erfindungsgemässen Befestigungselementes;
- Fig. 2: einen Detailschnitt durch das in Fig. 1 dargestellte Befestigungselement; und
- Fig.3: einen schematischen Detailschnitt beim Setzen des in Fig. 1 dargestellten Befestigungselementes.

Grundsätzlich sind in den Figuren gleiche Teile mit den gleichen Bezugszeichen versehen.

Das in den Figuren dargestellte Befestigungselement 11 für mineralische Untergründe 6 ist eine gewindefurchende Betonschraube mit einem Schaft 12, der ein erstes setzrichtungsseitiges Ende 13 und ein dem ersten Ende 13 abgewandtes zweites Ende 16 aufweist. Am zweiten Ende 16 des Schafts 12 ist als Drehangriffsmittel 17 für ein hier nicht dargestelltes Setzwerkzeug ein Sechskant-Schraubenkopf vorgesehen. Ausgehend von einem Endbereich des ersten Endes 13 des Schafts 12 erstreckt sich bereichsweise entlang des Schafts 12 ein gewindefurchendes Gewinde 14. Der Schaft 12 ist vom ersten Ende 13 in Richtung des zweiten Endes 16 bereichsweise mit einer Beschichtung 21 aus einem polaren Thermoplast versehen. Der polare Thermoplast ist ein Ethylenvinylacetat (EVA), der eine Schmelztemperatur nach DSC von 60°C und eine Festigkeit von 4 N/mm² aufweist. Der polare Thermoplast wird in einem Wirbelsinterverfahren auf das Befestigungselement 11 zumindest im Bereich des Gewindes 14 aufgebracht.

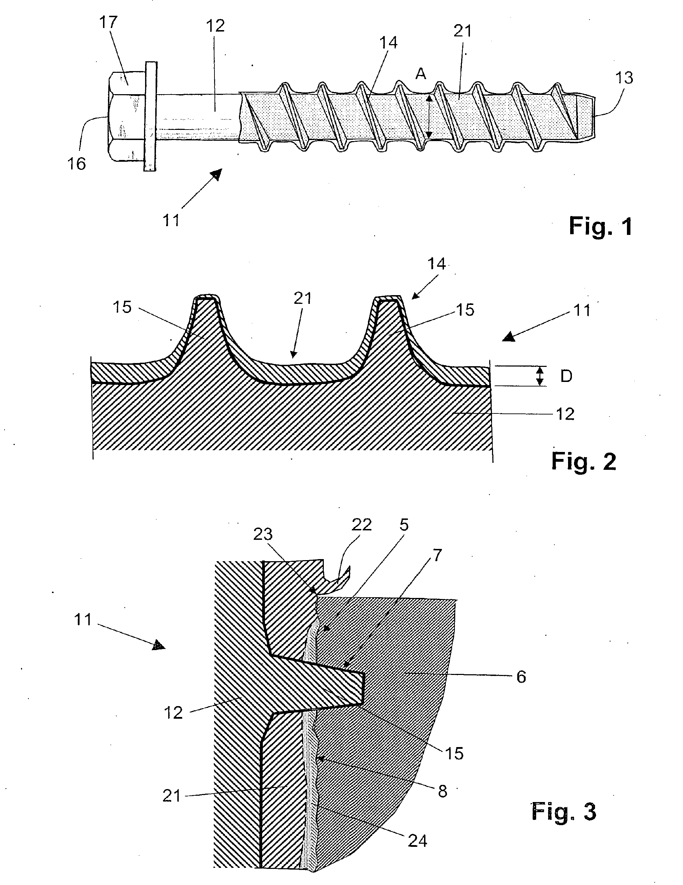

Wie in der Figur 2 dargestellt, weist die Beschichtung 21 zwischen den Gewindegängen 15 eine glockenförmige Verteilung auf, wobei die Schichtdicke der Beschichtung 21 zwischen den Gewindegängen 15 dicker als an den Gewindeflanken 15 ist. Die freien Enden der Gewindeflanken 15 müssen nicht zwingend mit der Beschichtung 21 versehen sein, da beim Furchen des Gegengewindes in den Untergrund 6 die Beschichtung 21 in diesem Bereich vollständig abgetragen wird. Die Schichtdicke D der Beschichtung 21 zwischen den Gewindegängen 15 beträgt für einen Ausgleich von Bohrlochtoleranzen etwa das 0.005- bis 0.10-fache des Kerndurchmessers A des Schafts 12 im Bereich des Gewindes 14.

Anhand der Figur 3 wird nachfolgend die Funktionsweise des erfindungsgemässen Befestigungselementes dargelegt. In einem ersten Schritt wird ein Bohrloch 5 in den Untergrund 6 erstellt. Anschliessend wird das Befestigungselement 11 mit einem Setzwerkzeug in das Bohrloch 5 eingeschraubt. Beim Eindrehen des Befestigungselementes 11 furchen sich die Gewindeflanken 15 in den Untergrund und erzeugen dabei das Gegengewinde 7. Gleichzeitig wird der überschüssige Anteil 22 der Beschichtung 21 durch ein kohäsives Schälversagen des polaren Thermoplasts von der Beschichtung 21 abgeschält. Aufgrund der geringen Festigkeit und der starken Haftung auf dem Schaft 12 des polaren Thermoplasts verläuft der Schälschnitt 23 durch die Beschichtung 21. Aufgrund der Polarität des polaren Thermoplasts bleibt ein für eine vollständige Abdichtung des Bohrlochs 5 gegenüber flüssigen Medien erforderliche Anteil der Beschichtung 21 auch nach dem Abschälen der überschüssigen Anteile 22 an dem Schaft 12 haften.

Während des Eindrehens erwärmt sich infolge der auftretenden Reibung zwischen der Beschichtung 21 und der Bohrlochwandung 8 die Beschichtung 21 in einem radial aussenliegenden Schmelzbereich 24. Das im Bohrloch 5 vorhandene und beim Furchen des Gegengewindes 7 anfallende Bohrmehl wird im Schmelzbereich 24 der Beschichtung 21 aufgenommen, wodurch die Beschichtung 21 nach dem Abkühlen des Schmelzbereichs 24 bereichsweise verstärkt ist. Zudem verklebt die Beschichtung 21 leicht lösbar mit der Bohrlochwandung 8.

## Patentansprüche

1. Befestigungselement für mineralische Untergründe (6) mit einem Schaft (12), der ein Drehangriffsmittel (17) aufweist und der zumindest bereichsweise mit einem gewindefurchenden Gewinde (14) sowie zumindest bereichsweise mit einer Beschichtung (21) versehen ist, **dadurch gekennzeichnet, dass** die Beschichtung (21) ein polarer Thermoplast ist, der eine Schmelztemperatur von 50°C bis 150° C aufweist.

2. Befestigungselement nach Anspruch 1, **dadurch gekennzeichnet, dass** der polare Thermoplast eine Schmelztemperatur von 50°C bis 100° C aufweist.

3. Befestigungselement nach Anspruch 1, **dadurch gekennzeichnet, dass** der polare Thermoplast ein Ethylenvinylacetat (EVA) ist.

4. Befestigungselement nach Anspruch 1, **dadurch gekennzeichnet, dass** der polare Thermoplast ein thermoplastisches Polyurethan (TPU) ist.

5. Befestigungselement nach einem der Ansprüche 1 bis 4, **dadurch gekennzeichnet, dass** der polare Thermoplast eine Festigkeit bei Raumtemperatur von 2 N/mm² bis 15 N/mm² aufweist.

6. Befestigungselement nach Anspruch 5, **dadurch gekennzeichnet, dass** der polare Thermoplast eine Festigkeit bei Raumtemperatur von 2 N/mm² bis 10 N/mm² aufweist.

## Claims

1. Fastening element for mineral substrates (6) with a shank (12) that carries driving flats (17) and is provided with a thread-forming thread (14) over at least part of its length and is also provided with a coating (21) over at least part of its length, **characterized in that** the coating (21) is a polar thermoplastic that has a melting point of 50°C to 150°C.

2. Fastening element according to Claim 1, **characterized in that** the polar thermoplastic has a melting point of 50°C to 100°C.

3. Fastening element according to Claim 1, **characterized in that** the polar thermoplastic is an ethylene vinyl acetate (EVA).

4. Fastening element according to Claim 1, **characterized in that** the polar thermoplastic is a thermoplastic polyurethane (TPU).

5. Fastening element according to any one of Claims 1 to 4, **characterized in that** the polar thermoplastic has a strength at room temperature of 2 N/mm² to 15 N/mm².

6. Fastening element according to Claim 5, **characterized in that** the polar thermoplastic has a strength at room temperature of 2 N/mm² to 10 N/mm².

## Revendications

1. Élément de fixation pour supports minéraux (6), comprenant une tige (12), laquelle comporte un moyen de mise en rotation (17) et est munie au moins par endroits d'un filetage autotaraudeur (14) et au moins par endroits d'un revêtement (21), **caractérisé en ce que** le revêtement (21) est un thermoplastique polaire qui possède une température de fusion comprise entre 50°C à 150°C.

2. Élément de fixation selon la revendication 1, **caractérisé en ce que** le thermoplastique polaire possède une température de fusion comprise entre 50°C et 100°C.

3. Élément de fixation selon la revendication 1, **caractérisé en ce que** le thermoplastique polaire est un éthylène-acétate de vinyle (EVA).

4. Élément de fixation selon la revendication 1, **caractérisé en ce que** le thermoplastique polaire est un polyuréthanne thermoplastique(TPU).

5. Élément de fixation selon une des revendications 1 à 4, **caractérisé en ce que** le thermoplastique polaire présente une résistance mécanique à température ambiante de 2 N/mm²à 15 N/mm².

6. Élément de fixation selon la revendication 5, **caractérisé en ce que** le thermoplastique polaire présente une résistance mécanique à température ambiante de 2 N/mm² à 10 N/mm².
